(19) Europäisches Patentamt / European Patent Office / Office européen des brevets

(11) **EP 4 455 219 A1**

(12) **EUROPEAN PATENT APPLICATION**
published in accordance with Art. 153(4) EPC

(43) Date of publication:
**30.10.2024 Bulletin 2024/44**

(21) Application number: **22911163.8**

(22) Date of filing: **19.12.2022**

(51) International Patent Classification (IPC):
**C08L 77/06** (2006.01)     **C08G 69/02** (2006.01)
**C08K 7/02** (2006.01)

(52) Cooperative Patent Classification (CPC):
**C08G 69/02; C08K 7/02; C08L 77/06**

(86) International application number:
**PCT/JP2022/046621**

(87) International publication number:
**WO 2023/120461 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2021 JP 2021206181**

(71) Applicant: **Kuraray Co., Ltd.**
**Kurashiki-shi, Okayama 710-0801 (JP)**

(72) Inventor: **NANYA, Atsushi**
**Tsukuba-shi, Ibaraki 305-0841 (JP)**

(74) Representative: **Müller-Boré & Partner
Patentanwälte PartG mbB
Friedenheimer Brücke 21
80639 München (DE)**

(54) **POLYAMIDE COMPOSITION**

(57)    A polyamide composition comprises a polyamide (A) and a fibrous filler (B), in which the polyamide (A) comprises a diamine unit (X) and a dicarboxylic acid unit (Y), the diamine unit (X) comprises 0.1 mol% or more and less than 36 mol% of a diamine unit (X1), the diamine unit (X1) is a constituent unit derived from an aliphatic diamine, and the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

**Description**

Technical Field

The present invention relates to a polyamide composition including: a polyamide containing a specific diamine unit having a branched chain, and a dicarboxylic acid unit; and a fibrous filler.

Background Art

Crystalline polyamides represented by nylon 6 and nylon 66 are widely used for industrial parts because of their excellent heat resistance, mechanical properties, and moldability. For example, in automotive applications, replacement of metal parts to plastic parts has been promoted from the viewpoint of weight reduction and design flexibility, and crystalline polyamides excellent in the above properties are often used. However, performance required for plastic materials has become severe from the viewpoint of improving fuel efficiency and complying with environmental regulations, and materials with more excellent performance in terms of heat resistance are required.

In addition, from the viewpoint of reducing the production cost of parts, there is a demand for a material which is solidified in a short time when the material is cooled from a molten state, that is, a material with a high crystallization rate. When the crystallization rate is high, the time required for molding one part can be shortened, and the production efficiency can be improved.

For example, PTL 1 indicates that a polyamide simultaneously satisfying flowability, toughness, and rigidity can be obtained when a diamine unit having a branched structure is contained, in a proportion of at least 50 mol%, in the main chain of the polyamide. PTL 2 discloses a method for producing a polyamide composition containing a diamine unit having a methyl or ethyl branch. PTL 3 discloses a polyamide composition containing a polyamide in which 60 mol% or more and 100 mol% or less of diamine units thereof are a branched aliphatic diamine unit and a linear aliphatic diamine unit having an arbitrary constituent unit.

Citation List

Patent Literature

PTL 1: JP2011-080055A
PLT 2: JP2017-517594A
PLT 3: WO2020/040282A1

Summary of Invention

Technical Problem

In PTLs 1 to 3, a methyl group, an ethyl group, and an n-propyl group are described as substituents branched from a main chain of a constituent unit derived from a diamine forming a polyamide. However, only a diamine having a methyl group as a branched chain is shown as specific examples. None of the documents specifically discloses containing, as a branched chain, a branched diamine that has a substituent having carbon atoms more than carbon atoms in a methyl group, and an effect provided by having a branched chain having 2 or more carbon atoms is not clear.

As described above, while a material with a high crystallization rate is required, physical properties such as heat resistance, which a crystalline polyamide originally has, and mechanical properties like strength and an elastic modulus are also required, and these physical properties are required to be simultaneously achieved.

Therefore, the present invention provides a polyamide composition excellent in heat resistance, mechanical properties, and moldability.

Solution to Problem

As a result of intensive studies to solve the above problems, the present inventor has conceived of the present invention described below and found that the problems can be solved.

In other words, the present invention is as follows.

[1] A polyamide composition comprising a polyamide (A) and a fibrous filler (B), in which

the polyamide (A) comprises a diamine unit (X) and a dicarboxylic acid unit (Y),
the diamine unit (X) comprises 0.1 mol% or more and less than 36 mol% of a diamine unit (X1),
the diamine unit (X1) is a constituent unit derived from an aliphatic diamine, and the aliphatic diamine has 6 to 10 carbon atoms, the aliphatic diamine having an alkyl group having two or three carbon atoms bonded to a carbon atom at 2-position 2 when a carbon atom to which any one of two amino groups is bonded is taken as 1-position.

[2] The polyamide composition according to [1] above, in which the diamine unit (X1) comprises a constituent unit derived from an aliphatic diamine having 9 carbon atoms.

[3] The polyamide composition according to [1] or [2] above, in which the diamine unit (X1) comprises a constituent unit derived from at least one selected from the group consisting of 2-ethyl-1,7-heptanediamine and 2-propyl-1,6-hexanediamine.

[4] The polyamide composition according to any one of [1] to [3] above, in which the diamine unit (X) comprises 1 to 10 mol% of the diamine unit (X1).

[5] The polyamide composition according to any one of [1] to [4] above, in which the diamine unit (X) further comprises a diamine unit (X2), the diamine unit (X2) is a diamine unit other than the diamine unit (X1), and the diamine unit (X2) is a constituent unit derived from at least one selected from the group consisting of a linear aliphatic diamine, a branched aliphatic diamine other than the aliphatic diamine constituting the diamine unit (X1), an alicyclic diamine, and an aromatic diamine.

[6] The polyamide composition according to any one of [1] to [5] above, in which the diamine unit (X2) is a constituent unit derived from at least one selected from the group consisting of a linear aliphatic diamine and a branched aliphatic diamine having a methyl group as a branched chain.

[7] The polyamide composition according to any one of [1] to [6] above, in which the diamine unit (X2) is a constituent unit derived from a diamine having 6 to 10 carbon atoms.

[8] The polyamide composition according to any one of [1] to [7] above, in which the diamine unit (X2) is a constituent unit derived from at least one selected from the group constituting of 1,6-hexanediamine, 1,9-nonanediamine, 1,10-decanediamine, 2-methyl-1,5-pentanediamine, and 2-methyl-1,8-octanediamine.

[9] The polyamide composition according to any one of [1] to [8] above, in which $[NH_2]/[COOH]$ indicative of a terminal amino group amount to a terminal carboxy group amount in the polyamide (A) is 0.1 to 30.

[10] The polyamide composition according to any one of [1] to [9] above, in which the dicarboxylic acid unit (Y) comprises a constituent unit derived from at least one selected from the group consisting of an aliphatic dicarboxylic acid, an aromatic dicarboxylic acid, and an alicyclic dicarboxylic acid.

[11] The polyamide composition according to any one of [1] to [10] above, in which the dicarboxylic acid unit (Y) includes a constituent unit derived from at least one selected from the group consisting of terephthalic acid, cyclohexanedicarboxylic acid, and naphthalenedicarboxylic acid.

[12] The polyamide composition according to any one of [1] to [11] above, comprising1 part by mass or more and 200 pars by mass or less of the fibrous filler (B) based on 100 parts by mass of the polyamide (A).

[13] The polyamide composition according to any one of [1] to [12] above, in which the fibrous filler (B) is at least one selected from the group consisting of carbon fibers, glass fibers, and aramide fibers.

[14] A molded body composed of the polyamide composition according to any one of [1] to [13] above.

Advantageous Effects of Invention

According to the present invention, a polyamide composition with an excellent crystallization rate and excellent heat resistance as well as excellent mechanical properties can be provided.

Description of Embodiments

Hereinafter, the present invention will be described on the basis of an example of an embodiment (hereinafter, sometimes referred to as "the present embodiment") thereof. However, embodiments described below are examples for embodying the technical idea of the present invention, and the present invention is not limited to the following description.

In addition, in the description herein, preferred modes of the embodiments are shown, but a combination of two or more of individual preferred modes is also a preferred mode. Regarding the matters indicated by numerical ranges, in a case where there are several numerical ranges, it is possible to selectively combine a lower limit value and an upper limit value thereof to obtain a preferred mode.

In the description herein, when there is a description pertaining to a numerical range of "XX to YY", the description means "XX or more and YY or less."

In the description herein, "- unit" ("-" herein represents a monomer) means a "constituent unit derived from -." For example, a "dicarboxylic acid unit" means a "constituent unit derived from dicarboxylic acid," and a "diamine unit" means a "constituent unit derived from diamine."

<Polyamide composition>

[Polyamide (A)]

The polyamide (A) used in the present invention contains a diamine unit (X) and a dicarboxylic acid unit (Y).

The diamine unit (X) is characterized by including a specific amount of a diamine unit (X1) derived from an aliphatic diamine having 6 to 10 carbon atoms, the aliphatic diamine having an alkyl group having two or three carbon atoms bonded to a carbon atom at 2-position when a carbon atom to which any one of two amino groups is bonded is taken as 1-position.

In general, when a component having a large excluded volume such as a branched chain is contained in a polymer backbone, molecular chains are less likely to be regularly arranged, and thus the crystallization rate of the polymer tends to be low. However, when the polyamide (A) includes a specific amount of the diamine unit (X1) having, as a branched chain, an alkyl group having 2 or 3 carbon atoms, such as an ethyl group or a propyl group, the crystallization rate is made unexpectedly high.

In general, when a polyamide has a bulky substituent such as a branched chain, the polyamide is less likely to have a crystal structure, and the melting point thereof tends to decrease. However, even when the polyamide (A) in the present embodiment has, as a branched chain, a relatively bulky substituent having 2 or 3 carbon atoms, such as an ethyl group or a propyl group, decrease in melting point is small, and excellent heat resistance can be exhibited.

Further, glass transition temperature is a property which becomes higher as the molecular mobility of the amorphous portion of a substance becomes lower. Therefore, when a component having high molecular mobility such as a branched chain is contained, glass transition temperature generally tends to become lower. However, the polyamide (A) in the present embodiment surprisingly has little decrease in the glass transition temperature, and can exhibit excellent heat resistance.

As one reason why the above-described effects are provided, it is considered that the number of carbon atoms in the branched chain, the position of the branched chain, and the amount of the branched chain in the diamine unit (X1) contained in the polyamide (A) may affect improvement of the crystallization rate while maintaining excellent heat resistance. However, the detailed reason is not clear.

As the polyamide composition of the present embodiment includes the polyamide (A) and a fibrous filler (B), the polyamide composition of the present embodiment has excellent mechanical properties while maintaining excellent physical properties of the polyamide (A).

(Diamine unit (X))

<Diamine unit (X)>

The diamine unit (X) includes a diamine unit (X1) derived from an aliphatic diamine having 6 to 10 carbon atoms, the aliphatic diamine having an alkyl group having two or three carbon atoms bonded to a carbon atom at 2-position when a carbon atom to which any one of two amino groups is bonded is taken as 1-position.

Assuming a linear aliphatic chain in which the carbon atoms at both ends thereof are carbon atoms to which two amino groups respectively is bonded, the diamine unit (X1) is derived from the aliphatic diamine having a structure in which one of the hydrogen atoms on the carbon atom at 2-position adjacent to the carbon atom at 1-position to which any one of two amino groups is bonded is substituted with an alkyl group having 2 or 3 carbon atoms. Hereinbelow, the constituent unit derived from the aliphatic diamine having a structure in which one of the hydrogen atoms on the carbon atom at 2-position is substituted with an alkyl group having 2 or 3 carbon atoms is also referred to as the "branched aliphatic diamine unit."

When the number of carbon atoms in the alkyl group is 1 or is 4 or more, there is a possibility that the crystallization rate is not improved and heat resistance is deteriorated.

The number of carbon atoms of the branched aliphatic diamine unit forming the diamine unit (X1) is preferably 8 to 10 and more preferably 9. When the number of carbon atoms is within the above range, polymerization reaction between a dicarboxylic acid and a diamine proceeds well, and the physical properties of the polyamide composition are more easily improved.

In the branched aliphatic diamine unit forming the diamine unit (X), the alkyl group having 2 or 3 carbon atoms is preferably at least one selected from the group consisting of an ethyl group, a propyl group, and an isopropyl group, and is more preferably at least one selected from the group consisting of an ethyl group and a propyl group.

The branched aliphatic diamine forming the diamine unit (X1) may have a branched chain (referred to as an "additional branched chain") such as a methyl group on a carbon atom other than the carbon atom at 2-position as long as the effects of the present invention are not impaired. The number of additional branched chains is preferably one or less, and it is more preferable that the diamine unit (X1) contain no additional branched chain.

Examples of the diamine unit (X1) include constituent units derived from 2-ethyl-1,4-butanediamine, 2-ethyl-1,5-pentanediamine, 2-ethyl-1,6-hexanediamine, 2-ethyl-1,7-heptanediamine, 2-ethyl-1,8-octanediamine, 2-propyl-1,5-pentanediamine, 2-propyl-1,6-hexanediamine, 2-propyl-1,7-heptanediamine, and 2,4-diethyl-1,6-hexanediamine. One kind of these constituent units may be included alone or two or more kinds thereof may be included.

In particular, from the viewpoint that a further excellent improvement in crystallization rate can be expected, it is preferable that the diamine unit (X1) include a constituent unit derived from at least one selected from the group consisting of 2-ethyl-1,7-heptanediamine and 2-propyl-1,6-hexanediamine.

The diamine unit (X1) is included in the diamine unit (X) in an amount of 0.1 mol% or more and less than 36 mol%. When the amount of the diamine unit (X1) is 0.1 mol% or more, it is possible to improve the crystallization rate. When the amount of diamine unit (X) is less than 36 mol%, a possibility of deterioration in heat resistance can be decreased.

From the viewpoint of obtaining a polyamide composition having a more excellent balance between heat resistance and crystallization rate, the content ratio of the diamine unit (X1) in the diamine unit (X) is preferably 0.5 mol% or more, more preferably 1 mol% or more, still more preferably 3 mol% or more, and even more preferably 5 mol% or more. Meanwhile, from the above viewpoint, the content ratio of the diamine unit (X1) in the diamine unit (X) is preferably 35 mol% or less, more preferably 30 mol% or less, still more preferably 25 mol% or less, even more preferably 20 mol% or less, even more preferably 18 mol% or less, even more preferably 15 mol% or less, and even more preferably 10 mol% or less.

As one preferred embodiment, when the diamine unit (X1) includes a constituent unit derived from at least one selected from the group consisting of 2-ethyl-1,7-heptanediamine and 2-propyl-1,6-hexanediamine, an example of the content ratio of each constituent unit is as follows.

The content ratio of a constituent unit derived from 2-ethyl-1,7-heptanediamine in the diamine unit (X) is preferably 0.5 mol% or more and more preferably 2 mol% or more. Meanwhile, the content ratio is preferably 20 mol% or less, preferably 16 mol% or less, more preferably 10 mol% or less, and still more preferably 5 mol% or less. That is, the content ratio of the constituent unit derived from 2-ethyl-1,7-heptanediamine in the diamine unit (X) is preferably 0.5 mol% or more and 20 mol% or less.

The content ratio of a constituent unit derived from 2-propyl-1,6-hexanediamine in the diamine unit (X) is preferably 0.1 mol% or more, and more preferably 0.5 mol% or more. Meanwhile, the content ratio is preferably 5 mol% or less and more preferably 2 mol% or less. That is, the content ratio of the constituent unit derived from 2-propyl-1,6-hexanediamine in the diamine unit (X) is preferably 0.1 mol% or more and 5 mol% or less.

<Additional diamine unit>

The polyamide (A) contains, as the diamine unit (X), a diamine unit (hereinafter, also referred to as the "diamine unit (X2)") other than the diamine unit (X1).

The diamine unit (X2) is preferably a constituent unit derived from a diamine having 6 to 10 carbon atoms, more preferably a constituent unit derived from a diamine having 8 to 10 carbon atoms, and still more preferably a constituent unit derived from a diamine having 9 carbon atoms, from the viewpoint that polymerization reaction between a dicarboxylic acid and a diamine proceeds well.

Examples of the diamine unit (X2) include a constituent unit derived from at least one selected from the group consisting of a linear aliphatic diamine, a branched aliphatic diamine other than the aliphatic diamine constituting the diamine unit (X1), an alicyclic diamine, and an aromatic diamine.

Examples of the linear aliphatic diamine include ethylenediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, and 1,18-octadecanediamine.

Examples of the branched aliphatic diamine other than the aliphatic diamine constituting the diamine unit (X1) include 1, 2-propanediamine, 1-butyl-1,2-ethanediamine, 1,1 -dimethyl-1,4-butanediamine, 1 -ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2,3-dimethyl-1,4-butanediamine, 2-methyl-1,5-pentanediamine, 3-methyl-1,5-pentanediamine, 2-butyl-2-ethyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-methyl-1,9-nonanediamine, and 5-methyl-1,9-nonanediamine.

Examples of the alicyclic diamine include cyclohexanediamine, methylcyclohexanediamine, norbornanedimethylamine, tricyclodecanedimethyldiamine, bis(4-amino-3-ethylcyclohexyl)methane, and bis(4-amino-3-ethyl-5-methylcyclohexyl)methane.

Examples of the aromatic diamine include p-phenylenediamine, m-phenylenediamine, p-xylylenediamine, m-xylylenediamine, 4,4'-diaminodiphenylmethane, 4,4'-diaminodiphenyl sulfone, 4,4'-diaminodiphenyl ether, and 4,4'-methylenebis(2,6-diethylaniline).

The constituent unit derived from a diamine may be only one kind, or may be two or more kinds.

Among the diamine unit (X2), a constituent unit derived from at least one selected from the group consisting of a linear aliphatic diamine and a branched aliphatic diamine containing a methyl group as a branched chain is more preferable. From the viewpoint of easily exhibiting the effects of the present invention more remarkably, the additional diamine unit is more preferably a constituent unit derived from at least one selected from the group consisting of 1,6-hexanediamine, 1,9-nonanediamine, 1,10-decanediamine, 2-methyl-1,5-pentanediamine, and 2-methyl-1,8-octanediamine.

(Dicarboxylic acid unit (Y))

As the dicarboxylic acid unit (Y), an arbitrary dicarboxylic acid unit may be included.

The dicarboxylic acid unit (Y) may include, for example, a constituent unit derived from at least one selected from the group consisting of an aliphatic dicarboxylic acid, an aromatic dicarboxylic acid, and an alicyclic dicarboxylic acid.

Examples of the aliphatic dicarboxylic acid include oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid.

Examples of the aromatic dicarboxylic acid include terephthalic acid, isophthalic acid, diphenic acid, 4,4'-biphenyldicarboxylic acid, diphenylmethane-4,4'-dicarboxylic acid, diphenylsulfone-4,4'-dicarboxylic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, 2,3-furandicarboxylic acid, 2,4-furandicarboxylic acid, 2,5-furandicarboxylic acid, and 3,4-furandicarboxylic acid.

Examples of the alicyclic dicarboxylic acid include 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid.

Only one kind of the constituent unit derived from a dicarboxylic acid may be included, or two or more kinds thereof may be included.

From the viewpoint of easily exhibiting the effects of the present invention more remarkably, the dicarboxylic acid unit (Y) preferably includes a constituent unit derived from at least one selected from the group consisting of an aromatic dicarboxylic acid and an alicyclic dicarboxylic acid, and more preferably includes a constituent unit derived from at least one selected from the group consisting of terephthalic acid, cyclohexanedicarboxylic acid, and naphthalenedicarboxylic acid. In particular, from the viewpoint of further improving the crystallization rate and heat resistance and the viewpoint of excellent hydrolysis resistance, it is still more preferably that the dicarboxylic acid unit (Y) include a constituent unit derived from terephthalic acid.

The molar ratio [diamine unit (X)/dicarboxylic acid unit (Y)] between the diamine unit (X) and the dicarboxylic acid unit (Y) in the polyamide (A) is preferably 45/55 to 55/45. When the molar ratio between the diamine unit (X) and the dicarboxylic acid unit (Y) is within the above range, polymerization reaction proceeds well, and a polyamide composition excellent in desired physical properties is easily obtained.

The molar ratio between the diamine unit (X) and the dicarboxylic acid unit (Y) can be adjusted according to the blending ratio (molar ratio) of a raw material diamine and a raw material dicarboxylic acid.

The total proportion of the diamine unit (X) and the dicarboxylic acid (Y) unit in the polyamide (A) (the proportion of the total number of moles of the diamine unit (X) and the dicarboxylic acid unit (Y) based on the number of moles of all the constituent units constituting the polyamide (A)) is preferably 70 mol% or more, more preferably 80 mol% or more, still more preferably 90 mol% or more, and even more preferably 95 mol% or more, and may also be 100 mol%. In addition, the total proportion of the diamine unit (X) and the dicarboxylic acid (Y) unit in the polyamide (A) may be 100 mol% or less and may be 99.5 mol% or less. That is, the total proportion of the diamine unit (X) and the dicarboxylic acid (Y) unit in the polyamide (A) is preferably 70 mol% or more and 100 mol% or less. When the total proportion of the diamine unit (X) and the dicarboxylic acid unit (Y) is within the above range, a polyamide composition having more excellent desired physical properties can be obtained.

(Amino carboxylic acid unit)

The polyamide (A) may further contain an amino carboxylic acid unit in addition to the diamine unit (X) and the dicarboxylic acid unit (Y).

Examples of the amino carboxylic acid unit include constituent units derived from: a lactam such as caprolactam and lauryllactam; and an amino carboxylic acid such as 11-aminoundecanoic acid and 12-aminododecanoic acid. The content ratio of the amino carboxylic acid unit in the polyamide (A) is preferably 40 mol% or less and more preferably 20 mol% or less based on 100 mol% of the total of the diamine unit (X) and the dicarboxylic acid unit (Y) constituting the polyamide (A).

(Polycarboxylic acid unit)

The polyamide (A) may contain a constituent unit derived from a polycarboxylic acid having a valence of 3 or more, such as trimellitic acid, trimesic acid, or pyromellitic acid, within a range in which melt molding is possible, as long as the effects of the present invention are not impaired.

(Terminal blocking agent unit)

The polyamide (A) may contain a constituent unit derived from a terminal blocking agent (terminal blocking agent unit).

The content ratio of the terminal blocking agent unit is preferably 1.0 mol% or more and more preferably 2.0 mol% or more based on 100 mol% of the diamine unit (X). In addition, the content ratio of the terminal blocking agent unit is preferably 10 mol% or less and more preferably 5.0 mol% or less based on 100 mol% of the diamine unit (X). That is, the content ratio of the terminal blocking agent unit is preferably 1.0 mol% or more and 10 mol% or less based on 100 mol% of the diamine unit (X). When the content ratio of the terminal blocking agent unit is within the above range, the polyamide (A) excellent in desired physical properties is easily obtained. The content ratio of the terminal blocking agent unit can be made to fall within the above desired range by appropriately adjusting the amount of the terminal blocking agent at the time of charging raw materials for polymerization. In consideration of volatilization of monomer components during polymerization, it is desirable to finely adjust the amount of the terminal blocking agent to be charged so that a desired amount of the terminal blocking agent unit is introduced into the polyamide (A) obtained.

Examples of a method for obtaining the content ratio of the terminal blocking agent unit in the polyamide (A) include, as described in JPH07-228690A, a method in which solution viscosity is measured, the total amount of terminal groups is calculated from an expression representing the relationship between solution viscosity and number-average molecular weights, and the amounts of amino groups and carboxy groups determined by titration are subtracted therefrom, and a method in which $^1$H-NMR is used to obtain the content ratio on the basis of integrated values of signals corresponding to the diamine unit and the terminal blocking agent unit, respectively, the latter being preferred.

As the terminal blocking agent, a monofunctional compound having reactivity with a terminal amino group or a terminal carboxy group can be used. Specific examples thereof include monocarboxylic acids, acid anhydrides, monoisocyanates, monoacid halides, monoesters, monoalcohols, and monoamines. From the viewpoints of reactivity and stability of blocked terminals, a monocarboxylic acid is preferable as the terminal blocking agent for terminal amino groups, and a monoamine is preferable as the terminal blocking agent for terminal carboxy groups. From the viewpoint of ease of handling, a monocarboxylic acid is more preferable as the terminal blocking agent.

The monocarboxylic acid used as the terminal blocking agent is not particularly limited as long as it has reactivity with an amino group, and examples thereof include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclopentanecarboxylic acid and cyclohexanecarboxylic acid; aromatic monocarboxylic acids such as benzoic acid, toluic acid, α-naphthalenecarboxylic acid, β-naphthalenecarboxylic acid, methylnaphthalenecarboxylic acid, and phenylacetic acid; and an arbitrary mixture thereof. Among these, at least one selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferable from the points of reactivity, stability of blocked terminals, and a price.

The monoamine used as the terminal blocking agent is not particularly limited as long as it has reactivity with a carboxy group, and examples thereof include aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; aromatic monoamines such as aniline, toluidine, diphenylamine, and naphthylamine; and an arbitrary mixture thereof. Among these, at least one selected from the group consisting of butylamine, hexylamine, octylamine, decylamine, stearylamine, cyclohexylamine, and aniline is preferable from the points of reactivity, a high boiling point, stability of blocked terminals, a price, and the like.

From the viewpoint of easily ensuring good heat resistance, mechanical properties, and moldability, the content ratio of the polyamide (A) included in the total amount of the polyamide composition of the present embodiment is preferably 30 to 95 mass%, more preferably 40 to 90 mass%, still more preferably 45 to 85 mass%, and further preferably 45 to 80 mass%.

(Physical properties of polyamide (A))

The inherent viscosity of the polyamide (A) is preferably 0.5 dl/g or more and more preferably 0.7 dl/g or more. Meanwhile, the inherent viscosity of the polyamide (A) is preferably 2.0 dl/g or less and more preferably 1.5 dl/g or less. That is, the inherent viscosity of the polyamide (A) is preferably 0.5 dl/g or more and 2.0 dl/g or less. When the inherent viscosity is within the above range, it is possible to obtain a polyamide (A) having more excellent desired physical properties.

The inherent viscosity of the polyamide (A) can be obtained by measuring the time of flow of a solution thereof using, as a solvent, concentrated sulfuric acid at a concentration of 0.2 g/dl and a temperature of 30°C. More specifically, the inherent viscosity of the polyamide (A) can be obtained by the method described in Examples.

The terminal amino group amount ($[NH_2]$) of the polyamide (A) is preferably 5 to 100 $\mu$mol/g. When the terminal amino group amount is 5 $\mu$mol/g or more, a further excellent crystallization rate can be exhibited, and good hydrolysis resistance can be exhibited. When the terminal amino group amount is 100 $\mu$mol/g or less, further excellent heat resistance can be exhibited. From the viewpoints of the crystallization rate and hydrolysis resistance, the terminal amino group amount is more preferably 10 $\mu$mol/g or more and still more preferably 15 $\mu$mol/g or more. From the viewpoint of heat resistance, the terminal amino group amount is more preferably 70 $\mu$mol/g or less, still more preferably 50 $\mu$mol/g or less, and even more preferably 35 $\mu$mol/g or less.

The terminal amino group amount in the present invention refers to the amount (unit: $\mu$mol) of terminal amino groups contained in 1 g of the polyamide (A). The terminal amino group amount can be obtained by a neutralization titration method using an indicator. More specifically, the terminal amino group amount can be obtained by the method described in Examples.

The terminal carboxy group amount ($[COOH]$) of the polyamide (A) is preferably 10 to 100 $\mu$mol/g. When the terminal carboxy group amount is 10 $\mu$mol/g or more, a further excellent crystallization rate can be exhibited, and excellent heat resistance is easily exhibited. When the terminal carboxy group amount is 100 $\mu$mol/g or less, good hydrolysis resistance can be exhibited. From the viewpoints of the crystallization rate and heat resistance, the terminal carboxy group amount is more preferably 20 $\mu$mol/g or more and still more preferably 25 $\mu$mol/g or more. From the viewpoint of hydrolysis resistance, the terminal carboxy group amount is more preferably 70 $\mu$mol/g or less and still more preferably 50 $\mu$mol/g or less.

The terminal carboxy group amount in the present invention refers to the amount (unit: $\mu$mol) of terminal carboxy groups contained in 1 g of the polyamide (A). The terminal carboxy group amount can be obtained by a neutralization titration method using an indicator. More specifically, the terminal carboxy group amount can be obtained by the method described in Examples.

The polyamide (A) has $[NH_2]/[COOH]$ indicative of the terminal amino group amount to the terminal carboxy group amount is preferably 0.1 to 30, more preferably 0.1 to 20, and still more preferably 0.3 to 10. The $[NH_2]/[COOH]$ may be 0.3 to 5 and may be 0.3 to 3. When the $[NH_2]/[COOH]$ is 0.1 or more, a further excellent crystallization rate can be exhibited, and good hydrolysis resistance can be exhibited. When the $[NH_2]/[COOH]$ is 30 or less, further excellent heat resistance is exhibited.

The melting point of the polyamide (A) is preferably 250°C or higher and more preferably 280°C or higher. When the melting point is within the above range, a polyamide composition having further excellent heat resistance can be obtained. The upper limit of the melting point of the polyamide (A) is not particularly limited, but is preferably 330°C or lower in consideration of moldability. That is, the melting point of the polyamide (A) is preferably 250°C or higher and 330°C or lower.

The melting point of the polyamide (A) can be obtained as the peak temperature of an endothermal peak that appears when temperature is raised at a rate of 10°C/minute using a differential scanning calorimetry (DSC) analyzer. More specifically, the melting point of the polyamide (A) can be obtained by the method described in Examples.

The glass transition temperature of the polyamide (A) is preferably 110°C or higher and more preferably 120°C or higher. When the glass transition temperature is within the above range, a polyamide composition having further excellent heat resistance can be obtained. The upper limit of the glass transition temperature of the polyamide (A) is not particularly limited, but is preferably 180°C or lower and more preferably 160°C or lower, and may be 150°C or lower, from the viewpoint of handling. That is, the glass transition temperature of the polyamide (A) is preferably 110°C or higher and 180°C or lower.

The glass transition temperature of the polyamide (A) can be obtained as a temperature at an inflection point that appears when temperature is raised at a rate of 20°C/minute using a differential scanning calorimetry (DSC) analyzer. More specifically, the glass transition temperature of the polyamide (A) can be obtained by the method described in Examples.

The crystallization rate of the polyamide (A) is preferably 0.020°C$^{-1}$ or more and more preferably 0.040°C$^{-1}$ or more. When the crystallization rate is within the above range, a highly productive polyamide composition can be obtained.

The crystallization rate can be obtained by the following formula (Formula 1).

Crystallization rate (°C$^{-1}$) = 1/(melting point (°C) - crystallization temperature (°C))

(Method for producing polyamide (A))

The polyamide (A) can be produced by using any method known as a method for producing a polyamide. For example, the polyamide (A) can be produced by a melt polymerization method, a solid phase polymerization method, or a melt extrusion polymerization method using a dicarboxylic acid and a diamine as raw materials. Among these, a solid phase polymerization method is preferable from the viewpoint that thermal deterioration during polymerization can be more favorably suppressed.

The polyamide (A) is produced, for example, firstly by adding a diamine, a dicarboxylic acid, and optionally a catalyst and a terminal blocking agent all at once to produce a nylon salt. At this time, the terminal amino group amount and the terminal carboxy group amount are made easier to control by preparing the number of moles of all carboxy groups and the number of moles of all amino groups contained in reaction raw material. After production of the nylon salt, the nylon salt is heated and polymerized at a temperature of 200 to 250°C to form a prepolymer, and the prepolymer is further subjected to solid phase polymerization or polymerization using a melt extruder, and the polyamide (A) can thus be produced. When the final stage of the polymerization is carried out by solid phase polymerization, the polymerization is preferably carried out under reduced pressure or in an inert gas flow, and when the polymerization temperature is within the range of 200 to 280°C, the polymerization rate is high, the productivity is excellent, and coloring and gelling can be effectively suppressed. When the final stage of the polymerization is carried out using a melt extruder, the polymerization temperature is preferably 370°C or lower, and when the polymerization is carried out under such conditions, there is almost no decomposition, and the polyamide (A) with little deterioration is obtained.

Examples of the catalyst that can be used in producing the polyamide (A) include phosphoric acid, phosphorus acid, hypophosphorous acid, and salts and esters thereof. Examples of the salts and esters include a salt of phosphoric acid, phosphorus acid, or hypophosphorous acid with a metal such as potassium, sodium, magnesium, vanadium, calcium, zinc, cobalt, manganese, tin, tungsten, germanium, titanium, or antimony; an ammonium salt of phosphoric acid, phosphorus acid, or hypophosphorous acid; and an ethyl ester, an isopropyl ester, a butyl ester, a hexyl ester, an isodecyl ester, an octadecyl ester, a decyl ester, a stearyl ester, and a phenyl ester of phosphoric acid, phosphorus acid, or hypophosphorous acid.

The amount of the catalyst used is preferably 0.01% by mass or more and more preferably 0.05% by mass or more, and is preferably 1.0% by mass or less and more preferably 0.5% by mass or less, based on 100% by mass of the total mass of raw materials. When the amount of the catalyst used is the above-described lower limit or more, the polymerization proceeds favorably. When the amount of the catalyst used is the above-described upper limit value or less, impurities derived from the catalyst are less likely to be generated, and for example, when a polyamide composition is formed into a film, defects due to the impurities can be prevented.

[Fibrous filler (B)]

The polyamide composition of the present embodiment contains a fibrous filler (B). When the fibrous filler (B) is contained, heat resistance is further improved, and a polyamide composition having excellent mechanical properties can be obtained.

The fibrous filler (B) contained in the polyamide composition of the present embodiment is not particularly limited, and a known fibrous filler can be used as long as the effects of the present invention are not impaired.

Examples of the fibrous filler (B) include inorganic fibers such as carbon fibers, glass fibers, wollastonite, silicon carbide fibers, alumina fibers, potassium titanate fibers, aluminum borate fibers, ceramic fibers, basalt fibers, and fibers of metals (for example, gold, silver, copper, iron, nickel, titanium, and stainless steel); and organic fibers such as all-aromatic polyester fibers, polyphenylenesulfide fibers, aramide fibers, polysulfoneamide fibers, phenol resin fibers, polyimide fibers, and fluorine fibers. One kind of these fibers may be used singly, or two or more kinds thereof may be used in combination.

Among the fibrous filler (B), from the viewpoints of mechanical properties and availability, at least one selected from the group consisting of carbon fibers, glass fibers, wollastonite, aramide fibers, all-aromatic polyester fibers, ceramic fibers, and metal fibers is preferable; and at least one selected from the group consisting of carbon fibers, glass fibers, and aramide fibers is more preferable.

The average fiber diameter of the fibrous filler (B) is not particularly limited. However, from the viewpoint of making the contact area with the polyamide (A) better and the viewpoint of mechanical strength of a molded body, the average fiber diameter of the fibrous filler (B) is preferably 3 to 100 $\mu$m and more preferably 3 to 30 $\mu$m.

The average fiber length of the fibrous filler (B) is not particularly limited. However, from the viewpoints of heat resistance, mechanical properties, and workability of the polyamide composition, the average fiber length of the fibrous filler (B) is preferably 1 to 100 mm and more preferably 3 to 30 mm.

The average fiber diameter and the average fiber length of the fibrous filler (B) can be observed and measured by, for example, an optical microscope.

The fibrous filler (B) may be subjected to a treatment with a surface treating agent or a sizing agent, as needed.

Examples of those used when the fibrous filler (B) is glass fibers include a silane coupling agent and a titanate-based coupling agent. Examples of the silane coupling agent include, but are not limited to, aminosilane-based coupling agents such as $\gamma$-aminopropyltriethoxysilane, $\gamma$-aminopropyltrimethoxysilane, and N-$\beta$-(aminoethyl)-$\gamma$-aminopropylmethyldimethoxysilane; mercaptosilane-based coupling agents such as $\gamma$-mercaptopropyltrimethoxysilane and $\gamma$-mercapto-propyltriethoxysilane; epoxysilane-based coupling agents; and vinylsilane-based coupling agents.

Examples of those used when the fibrous filler (B) is carbon fibers include a copolymer containing, as constituent units, a carboxylic anhydride-containing unsaturated vinyl monomer unit and an unsaturated vinyl monomer unit except the carboxylic anhydride-containing unsaturated vinyl monomer; an epoxy compound; a polyurethane resin; a homopolymer of acrylic acid; a copolymer of acrylic acid and another copolymerizable monomer; and a salt thereof with a primary, secondary, or tertiary amine.

One kind may be used singly, or two or more kinds may be used in combination as the surface treating agent and the sizing agent.

The fibrous filler (B) may be what is called a recycle or reuse product obtained by removing, from a fibrous filler having been compounded once with a plastic resin material generally used in industry, the plastic resin material. While the method for producing a recycle or reuse fibrous filler is not particularly limited, examples thereof include a method in which a compounded product is put into a firing furnace and fired at the decomposition temperature or higher of the plastic resin material, and the fibrous filler is taken out, a method in which electrolysis is combined with the firing method described above, and a method in which the plastic resin material is dissolved using an acid and an alkaline solvent.

The content of the fibrous filler (B) based on 100 parts by mass of the polyamide (A) in the polyamide composition is preferably 1 part by mass or more and more preferably 10 parts by mass or more, may be 20 parts by mass or more, and may be 30 parts by mass or more. In addition, the content of the fibrous filler (B) based on 100 parts by mass of the polyamide (A) in the polyamide composition is preferably 200 parts by mass or less and more preferably 150 parts by mass or less, may be 100 parts by mass or less, and may be 50 parts by mass or less. That is, the content of the fibrous filler (B) based on 100 parts by mass of the polyamide (A) is preferably 1 part by mass or more and 200 parts by mass or less. When the content of the fibrous filler (B) is within the above range, the polyamide composition obtained is likely to have further excellent heat resistance and mechanical properties, and productivity in forming a composite with the polyamide (A) and in forming various molded bodies through molding is made better.

[Additional additive]

The polyamide composition may include an additional additive in addition to the polyamide (A) and the fibrous filler (B) described above, as needed.

Examples of the additional additive include an antioxidant, a colorant, an ultraviolet absorber, a photostabilizing agent, an antistatic agent, a flame-retardant, a flame-retardant aid, a nucleating agent, a plasticizer, a sliding agent, a lubricant, a dispersant, an oxygen absorber, a hydrogen sulfide adsorbent, a crystallization retardant, and an impact modifier (for example, elastomer).

The content of the additional additive is not particularly limited as long as the effects of the present invention are not impaired, but is preferably 0.02 to 100 parts by mass and more preferably 0.1 to 50 parts by mass based on 100 parts by mass of the polyamide (A).

A known method can be used as a method for adding the additional additive. Examples thereof include a method for adding the additional additive during polymerization of the polyamide (A), and a method for blending, in a dry manner, the additional additive to the polyamide (A) and melting and kneading the same.

(Method for producing polyamide composition)

The method for producing the polyamide composition is not particularly limited, and a method capable of uniformly mixing the polyamide (A) and the fibrous filler (B) can be preferably employed. For the mixing, in general, a melt-kneading method using a single screw extruder, a twin screw extruder, a kneader, or a Banbury mixer is preferably employed. Conditions for melt-kneading are not particularly limited, and a method in which melt-kneading is conducted for about 1 to 30 minutes at a temperature within the range of about 10 to 50°C higher than the melting point of the polyamide (A) is exemplified.

(Physical properties of polyamide composition)

The polyamide composition preferably has flexural strength of 100 MPa or more and more preferably has flexural strength of 150 MPa or more. In addition, the polyamide composition preferably has a flexural modulus of 2 GPa or more and more preferably has a flexural modulus of 5 GPa or more. When the flexural strength and the flexural modulus are within the above ranges, a polyamide composition having excellent heat resistance and mechanical properties can be obtained.
The flexural strength and the flexural modulus of the polyamide composition can be obtained by injection-molding the polyamide composition into a test specimen having a thickness of 4 mm and subsequently carrying out a flexural test. More specifically, the flexural strength and the flexural modulus of the polyamide composition can be obtained by the method described in Examples.

<Molded body>

As one of the present embodiment, a molded body composed of the above-described polyamide composition can be provided. The method for producing the molded body is not particularly limited, and a known method can be used. In addition, an additive such as a chain extender may be added during molding, and treatment such as heat treatment or electron beam crosslinking may be further carried out after molding.
The molded article of the present embodiment can be used as various molded bodies for electric parts, electronic parts, automobile parts, industrial parts, water faucet parts, fibers, films, sheets, household goods, leisure goods, and other parts with arbitrary shapes and applications.
Examples of the electric parts and the electronic parts include connectors such as an FPC connector, a B to B connector, a card connector, an SMT connector (a coaxial connector), and a memory card connector; SMT relays; SMT bobbins; sockets such as a memory socket and a CPU socket; switches such as a command switch and an SMT switch; optical components such as an optical fiber component and an optical sensor; LED application components such as an LED reflector; and electronic substrates such as a solar cell substrate, an LED-mounted substrate, a flexible printed wiring board, and a resin-molded circuit board.
Examples of the automobile parts include cooling components such as a thermostat housing, a housing for a coolant control valve, a housing for a thermal management module, a radiator tank, a radiator hose, a water outlet, a water inlet, a water pump housing, and a rear joint; intake and exhaust system components such as an intercooler tank, an intercooler case, a turbo duct pipe, an EGR cooler case, a resonator, a throttle body, an intake manifold, and a tail pipe; fuel system components such as a fuel delivery pipe, a gasoline tank, a quick connector, a canister, a pump module, a fuel pipe, an oil strainer, a lock nut, and a seal material; structural components such as a mount bracket, a torque rod, and a cylinder head cover; drive system components such as a bearing retainer, a gear tensioner, a head lamp actuator gear, a throttle valve gear, a slide door roller, and a clutch peripheral component; brake system components such as an air brake tube; in-vehicle electrical components such as a wire harness connector, a motor component, a sensor, an ABS bobbin, a combination switch, and an in-vehicle switch in an engine room; and interior and exterior parts such as a slide door damper, a door mirror stay, a door mirror bracket, an inner mirror stay, a roof rail, an engine mount bracket, an inlet pipe of an air cleaner, a door checker, a plastic chain, an emblem, a clip, a breaker cover, a cup holder, an airbag, a fender, a spoiler, a radiator support, a radiator grille, a louver, an air scoop, a hood bulge, a back door, and a fuel sender module.
Examples of the industrial parts include gas pipes, pipes for mining oilfields, hoses, anti-termite cables (communication cables and pass cables), coating parts of powder coated products (inner coating of water pipes), submarine oilfield pipes, pressure hoses, hydraulic tubes, paint tubes, housings and impellers for fuel pumps, separators, supercharging ducts, butterfly valves, conveyor roller bearings, railroad tie spring clip supports, outboard engine covers, generator engine covers, blades for wind power generators, irrigation valves, large switches, and constructions (buildings, roads, bridges, water channels, banks, and the like).
Examples of the water faucet parts include housings for components for conveying tap water, housings for components for storing tap water, housings for filter casings, housings for water outlets, housings for pipes, housings for bathroom faucets (water switching valves, water amount switching valves, and the like), housings for sanitary components, housings for kitchen water faucet, housings for water heaters, valve components (shut-off balls, slides, and cylinders) and valve component housings, toilet water shut-off valves, housings in a showerhead, valve housings for water heaters, joints for housing equipment piping (underfloor piping and the like), joints for bathroom faucets, joints for water piping, pipe joints, housings for water meters, components (bearings, propellers, and pins) for water meters and water meters, housings for gas meters, housings for distributors, valve/pump housings for household apparatuses, steam resistant components for steam irons, inner containers for electric kettles, components (washing tanks, washing nozzles, and baskets) for dishwashers, housings for pumps, pump components (for example, turbine wheels and impellers), housings for water supply systems (hot water tanks and the like), housings for heating systems, housings for cooling systems, water regulating valves, pressure reducing valves, relief valves, electromagnetic valves, three-way valves, thermo-valves, water temperature sensors, water amount sensors, and bathtub adapters.

Examples of the fibers include airbag base fabric, heat-resistant filters, reinforcing fibers, brush bristles, fishing lines, fishing nets, tire cords, artificial turf, carpets, and fibers for seat sheets.

Examples of the films or sheets include heat-resistant pressure-sensitive adhesive tapes such as heat-resistant masking tapes and industrial tapes; magnetic tape materials such as cassette tapes, data storage magnetic tapes for digital data storage, and video tapes; food packaging materials such as pouches for retort foods, individual packages for confectionery, and packages for processed meat products; and electronic component packaging materials such as packages for semiconductor packages.

Examples of the household goods include valve/pump housings for tea and coffee makers; valve/pump housings for cooking appliances (rice cookers, steam cookers, and the like); steam-resistant components (an upper lid of a rice cooker and the like) for cooking appliances (rice cookers, steam cookers, and the like); slide components (gears) of cooking appliances (rice cookers, steam cookers, and the like); slide components (a gear for a gear pump and the like) of institutional cooking appliances; and steam-resistant components (a pipe for an institutional rice cooker and the like) for institutional cooking appliances.

Examples of the leisure goods include inner soles and outer soles of sports shoes; frames and grommets of rackets; heads and sleeves of golf clubs; reels and rods of fishing goods; screws for boats; suspensions, gears, saddles, and bottle cages for bicycles.

Among these, since the polyamide composition of the present embodiment is excellent in crystallization rate, heat resistance, and mechanical properties, the polyamide composition of the present embodiment can be suitably used for automobile parts which are required to respond to tight cost requirement and are required to have high heat resistance and mechanical properties. Specifically, the polyamide composition of the present embodiment can be suitably used for a radiator tank, an intercooler tank, and an engine mount bracket.

Examples

Hereinafter, the present invention will be specifically described with reference to Examples and Comparative Examples, but the present invention is not limited thereto.

Each evaluation in Examples and Comparative Examples was performed in accordance with the following methods.

<Polyamide>

Inherent viscosity

The inherent viscosity (dl/g) of each of polyamides obtained in Examples and Comparative Examples was determined from the following formula using concentrated sulfuric acid as a solvent at a concentration of 0.2 g/dl and a temperature of 30°C.

$$\eta = [\ln(t_1/t_0)]/c$$

In the above formula, $\eta$ represents the inherent viscosity (dl/g), $t_0$ represents the flow-down time (second) of the solvent (concentrated sulfuric acid), ti represents the flow-down time (second) of a sample solution, and c represents the concentration (g/dl) of the sample in the sample solution (that is, 0.2 g/dl).

Melting point, crystallization temperature, and glass transition temperature

The melting point, crystallization temperature, and glass transition temperature of each of the polyamides obtained in Examples and Comparative Examples were measured using a differential scanning calorimetry analyzer "DSC7020" manufactured by Hitachi High-Tech Science Corporation.

The melting point and crystallization temperature were measured in accordance with ISO 11357-3 (second edition, 2011). Specifically, in a nitrogen atmosphere, a sample (polyamide) was heated from 30°C to 340°C at a rate of 10°C/minute, held at 340°C for five minutes to completely melt the sample, then cooled to 50°C at a rate of 10°C/minute, held at 50°C for five minutes, and then heated again to 340°C at a rate of 10°C/minute. The peak temperature of the exothermic peak that appeared when the temperature was decreased was defined as the crystallization temperature, and the peak temperature of the endothermic peak that appeared when the temperature was increased again was defined as the melting point (°C).

The glass transition temperature (°C) was measured in accordance with ISO 11357-2 (second edition, 2013). Specifically, in a nitrogen atmosphere, a sample (polyamide) was heated from 30°C to 340°C at a rate of 20°C/minute, held at 340°C for five minutes to completely melt the sample, then cooled to 50°C at a rate of 20°C/minute, and held at 50°C for five minutes. The temperature of the inflection point that appeared when the temperature was increased again to 200°C at a rate of 20°C/minute was defined as the glass transition temperature (°C).

Crystallization rate

The crystallization rate of each of the polyamides obtained in Examples and Comparative Examples was determined by the following formula (Formula 1).

$$\text{Crystallization rate (°C}^{-1}) = 1/(\text{melting point (°C)} - \text{crystallization temperature (°C))} \qquad \text{(Formula 1):}$$

In (Formula 1), the "melting point (°C)" and the "crystallization temperature (°C)" are measured values obtained by the above methods. In Table 1 and Table 2, the unit of the crystallization rate is expressed as "1/°C," which has the same meaning as "°C$^{-1}$."

<Polyamide composition>

Production of test specimen

Each of polyamide compositions obtained in Examples and Comparative Examples was molded with an injection molding machine (clamping force: 100 tons, screw diameter: ø32 mm) manufactured by Sumitomo Heavy Industries, Ltd. and a T runner mold at a cylinder temperature 20°C to 30°C higher than the melting point of the polyamide under the condition of a mold temperature of 140°C for the polyamide compositions of Examples 1 to 10, 13, and 14 and Comparative Examples 1 to 3, 5, and 6 and under the condition of a mold temperature of 170°C for the polyamide compositions of Examples 11 and 12 and Comparative Example 4 to produce a general-purpose test specimen type A1 (dumbbell test specimen described in JIS K7139:2009, thickness: 4 mm, whole length: 170 mm, length of parallel section: 80 mm, width of parallel section: 10 mm).

Flexural strength, flexural modulus (mechanical strength)

Using the general-purpose test specimen type A1 (4 mm thick) produced in the above method, flexural strength (MPa) and flexural modulus (GPa) were measured with a universal material tester (manufactured by Instron) in accordance with ISO178 (second edition , 2012) under the conditions of test speed of 2 mm/minute and a fulcrum distance of 64 mm.

Hue stability (heat resistance)

The general-purpose test specimen type A1 produced in the above method was left to stand in a hot air dryer at 150°C for 50 hours. The test specimen was taken out, and the change in color of the test specimen was visually observed, compared with a test specimen before heat treatment, and evaluated according to the following criteria.

<Evaluation criteria>

**[0126]**

　　A: No change

B: Slightly colored
C: Clearly colored

Heat aging resistance (heat resistance)

The general-purpose test specimen type A1 produced in the above method was left to stand in a hot air dryer at 150°C for 50 hours. The test specimen was taken out, and the molecular weights of the test specimen and a test specimen without heat treatment were measured, and the molecular weight change rate was calculated by the following formula (Formula 2). Evaluation was made from the calculated molecular weight change rate according to the following criteria. Incidentally, the molecular weights of the test specimens were measured according to the molecular weight measurement described later.

Molecular weight change rate (%) = (molecular weight after heat treatment - molecular weight before heat treatment)/(molecular weight before heat treatment) $\times$ 100      (Formula 2):

<Evaluation criteria>

A: The molecular weight change rate is within $\pm$10%
B: The molecular weight change rate exceeds $\pm$10% and is within $\pm$20%
C: The molecular weight change rate exceeds $\pm$20%

Hydrolysis resistance

The general-purpose test specimen type A1 produced in the above method was immersed in an antifreeze liquid (an aqueous solution obtained by diluting twice "Super Long Life Coolant" (pink) manufactured by TOYOTA MOTOR CORPORATION) in a pressure-resistant container, and the pressure-resistant container was left to stand, for 100 hours, in an isothermal bath the temperature of which was set to 130°C. The molecular weights of the test specimen taken out and a test specimen without immersion treatment were measured, and the molecular weight change rate was calculated by the following formula (Formula 3). Evaluation was made from the calculated molecular weight change rate according to the following criteria. Incidentally, the molecular weights of the test specimens were measured according to the molecular weight measurement described later.

Moleclar weight change rate (%) = (molecular weight after immersion treatment - molecular weight before immersion treatment)/(molecular weight before immersion treatment) $\times$ 100      (Formula 3):

<Evaluation criteria>

A: The molecular weight change rate is within $\pm$10%
B: The molecular weight change rate exceeds $\pm$10% and is within $\pm$20%
C: The molecular weight change rate exceeds $\pm$20%

Molecular weight measurement

The molecular weight of the general-purpose test specimen type A1 was obtained by gel permeation chromatography (GPC) as a molecular weight in terms of standard polymethyl methacrylate. Specifically, a 1,1,1,3,3,3-hexafluoroisopropanol (HFIP) solution in which sodium trifluoroacetate was dissolved at a proportion of 0.85 g per 1 kg of HFIP was prepared as an eluent, and 1.5 mg of the specimen (the general-purpose test specimen type A1 mentioned above) was weighed in terms of resin and dissolved in 3 mL of the eluent. The obtained solution was passed through a 0.2 $\mu$m membrane filter to produce a measurement sample, and measurement was conducted under the following conditions.

(Measurement conditions)

Device: HLC-8320GPC (manufactured by Tosoh Corporation)
Column: two pieces of TSkgel Super HM-H (manufactured by Tosoh Corporation) were coupled in series.
Eluent: 10 mmol/L sodium trifluoroacetate/HFIP solution
Flow rate: 0.5 mL/minute (reference column: 0.25 mL/minute)
Sample injection amount: 30 $\mu$L
Column temperature: 40°C
Standard polymethyl methacrylate: Shodex Standard M-75 manufactured by Showa Denko K.K., Polymethyl methacrylates manufactured by Agilent Technologies Japan, Ltd. (Polymethyl methacrylates with a molecular weight of 1010, 535)
Detector: UV (254 nm) detector

Moldability (crystallization rate)

The shortest cooling time at which neither sinkmark nor voids appears in the test specimen and which allows smooth release from the mold was determined when the general-purpose test specimen type A1 was produced in the "Production of test specimen" above. Evaluation was made from the cooling time according to the following criteria.

<Evaluation criteria>

A: Cooling time is within 10 seconds
B: Cooling time exceeds 10 seconds and is within 15 seconds
C: Cooling time exceeds 15 seconds

Additional additives used in Examples and Comparative Examples are shown below.

<Additional additives>

Antioxidant

"KG HS01-P" (manufactured by PolyAd Services LLC)

Lubricant

"LICOWAX (registered trademark) OP" (manufactured by Clariant Chemicals Ltd) Nucleating agent
"TALC ML112" (manufactured by Fuji talc industrial Co., Ltd.)

Colorant 1

"#980B" (manufactured by Mitsubishi Chemical Corporation)

Colorant 2

"NUBIAN (registered trademark) BLACK TH-857" (manufactured by ORIENT CHEMICAL INDUSTRIES CO., LTD)

Impact modifier

"TAFMER (registered trademark) MH7010" (manufactured by Mitsui Chemicals, Inc.)

[Example 1]

Into an autoclave having an internal volume of 40 litters were put 5400 g of terephthalic acid, 5260 g of a mixture [4/1/95 (molar ratio)] of 2-ethyl-1,7-heptanediamine, 2-propyl-1,6-hexanediamine, and 2-methyl-1,8-octanediamine, 121 g of benzoic acid, 10 g of sodium phosphinate monohydrate (0.1% by mass with respect to the total mass of the raw materials), and 4.8 litters of distilled water, and nitrogen replacement was carried out. The mixture was stirred at 150°C for 30 minutes, and the temperature inside the autoclave was then increased to 220°C over two hours. At this time, the pressure inside the autoclave increased to 2 MPa. Heating was continued for five hours while maintaining the pressure at 2 MPa, and the reaction was allowed to proceed by gradually removing the water vapor. Thereafter, the pressure was decreased to 1.3 MPa over 30 minutes, and the reaction was further conducted for one hour to obtain a prepolymer. The obtained prepolymer was dried at 100°C under reduced pressure for 12 hours and pulverized to a particle diameter of 2 mm or less. The pulverized prepolymer was subjected to solid phase polymerization at 230°C and 13 Pa (0.1 mmHg) for 10 hours to obtain a polyamide having a melting point of 282°C.

A pellet-shaped polyamide composition was obtained by feeding the obtained polyamide and the additional additives at proportions shown in Table 1 from the upstream hopper of a twin screw extruder ("TEM-26SS" manufactured by Toshiba Machine Co., Ltd.), and simultaneously feeding glass fibers ("ECS 03 T-262H," manufactured by Nippon Electric Glass Co., Ltd.; values in catalog: fiber diameter is 10.5 μm, and fiber length is 3 mm) from the side feeding port on the downstream side of the extruder such that each of the proportions shown in Table 1 was achieved, followed by melt-kneading, extrusion, cooling, and cutting.

[Example 2]

A polyamide and a polyamide composition were obtained in the same manner as in Example 1, except that the diamine unit was obtained from a mixture [5.6/0.4/94 (molar ratio)] of 2-ethyl-1,7-heptanediamine, 2-propyl-1,6-hexanediamine, and 2-methyl-1,8-octanediamine.

[Example 3]

A polyamide and a polyamide composition were obtained in the same manner as in Example 1, except that the diamine unit was obtained from a mixture [12/3/85 (molar ratio)] of 2-ethyl-1,7-heptanediamine, 2-propyl-1,6-hexanediamine, and 2-methyl-1,8-octanediamine.

[Example 4]

A polyamide and a polyamide composition were obtained in the same manner as in Example 1, except that the diamine unit was obtained from a mixture [16/4/80 (molar ratio)] of 2-ethyl-1,7-heptanediamine, 2-propyl-1,6-hexanediamine, and 2-methyl-1,8-octanediamine.

[Example 5]

A polyamide and a polyamide composition were obtained in the same manner as in Example 1, except that the diamine unit was obtained from a mixture [4/1/20/75 (molar ratio)] of 2-ethyl-1,7-heptanediamine, 2-propyl-1,6-hexanediamine, 2-methyl-1,8-octanediamine, and 1,9-nonanediamine.

[Example 6]

A polyamide and a polyamide composition were obtained in the same manner as in Example 5, except that the blended amount of glass fibers was changed to the proportion shown in Table 1.

[Example 7]

A polyamide and a polyamide composition were obtained in the same manner as in Example 5, except that carbon fibers ("PYROFIL (registered trademark) TR06NLB6R" manufactured by Mitsubishi Chemical Corporation; values in catalog: fiber diameter is 6 μm, and fiber length is 6 mm) were used instead of glass fibers.

[Example 8]

A polyamide and a polyamide composition were obtained in the same manner as in Example 1, except that the terminal amino group amount and the terminal carboxy group amount were adjusted to the contents shown in Table 1 by using, as the diamine unit, 5400 g of a mixture [4/1/20/75 (molar ratio)] of 2-ethyl-1,7-heptanediamine, 2-propyl-1,6-hexanediamine, 2-methyl-1,8-octanediamine, and 1,9-nonanediamine.

[Example 9]

A polyamide and a polyamide composition were obtained in the same manner as in Example 5, except that the terminal amino group amount and the terminal carboxy group amount were adjusted to the contents shown in Table 1 by blending the polyamide of Example 5 and the polyamide of Example 8 at 7:3 (mass ratio).

[Example 10]

A polyamide and a polyamide composition were obtained in the same manner as in Example 1, except that the diamine unit was obtained from a mixture [0.5/14.5/85 (molar ratio)] of 2-ethyl-1,7-heptanediamine, 2-methyl-1,8-octanediamine, and 1,9-nonanediamine.

[Comparative Example 1]

A polyamide and a polyamide composition were obtained in the same manner as in Example 5, except that no fibrous filler was blended.

[Comparative Example 2]

A polyamide and a polyamide composition were obtained in the same manner as in Example 1, except that the diamine unit included only 2-methyl-1,8-octanediamine units.

[Comparative Example 3]

A polyamide and a polyamide composition were obtained in the same manner as in Example 1, except that the diamine unit was obtained from a mixture [15/85 (molar ratio)] of 2-methyl-1,8-octanediamine and 1,9-nonanediamine.

[Example 11]

A polyamide and a polyamide composition were obtained in the same manner as in Example 5, except that the dicarboxylic acid unit was obtained from 7027 g of 2,6-naphthalenedicarboxylic acid.

[Example 12]

A polyamide and a polyamide composition were obtained in the same manner as in Example 11, except that carbon fibers ("PYROFIL (registered trademark) TR06NLB6R" manufactured by Mitsubishi Chemical Corporation; values in catalog: fiber diameter is 6 $\mu$m, and fiber length is 6 mm) were used instead of glass fibers.

[Comparative Example 4]

A polyamide and a polyamide composition were obtained in the same manner as in Example 11, except that the diamine unit was obtained from a mixture [15/85 (molar ratio)] of 2-methyl-1,8-octanediamine and 1,9-nonanediamine.

[Example 13]

A polyamide and a polyamide composition were obtained in the same manner as in Example 5, except that the dicarboxylic acid unit was obtained from 5600 g of 1,4-cyclohexanedicarboxylic acid (cis/trans = 79.9/20.1).

[Comparative Example 5]

A polyamide and a polyamide composition were obtained in the same manner as in Example 13, except that the diamine unit was obtained from a mixture [15/85 (molar ratio)] of 2-methyl-1,8-octanediamine and 1,9-nonanediamine.

[Example 14]

A polyamide and a polyamide composition were obtained in the same manner as in Example 1, except that the diamine unit was obtained from a mixture [4/1/20/75 (molar ratio)] of 2-ethyl-1,7-heptanediamine, 2-propyl-1,6-hexanediamine, 2-methyl-1,8-octanediamine, and 1,10-decanediamine.

[Comparative Example 6]

A polyamide and a polyamide composition were obtained in the same manner as in Example 14, except that the diamine unit was obtained from a mixture [20/80 (molar ratio)] of 2-methyl-1,8-octanediamine and 1,10-decanediamine.

Compositions of Examples and Comparative Examples and measurement results thereof are shown in Table 1 and Table 2.

Table 1

| | | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|---|
| Polyamide | Diamine unit | EHDA | mol% | 4 | 5.6 | 12 | 16 | 4 | 4 | 4 | 4 | 4 | 0.5 |
| | | PHDA | mol% | 1 | 0.4 | 3 | 4 | 1 | 1 | 1 | 1 | 1 | - |
| | | MODA | mol% | 95 | 94 | 85 | 80 | 20 | 20 | 20 | 20 | 20 | 14.5 |
| | | NMDA | mol% | - | - | - | - | 75 | 75 | 75 | 75 | 75 | 85 |
| | | DMDA | mol% | - | - | - | - | - | - | - | - | - | - |
| | | EHDA+PHDA | mol% | 5 | 6 | 15 | 20 | 5 | 5 | 5 | 5 | 5 | 0.5 |
| | Dicarboxylic acid unit | TA | mol% | 100 | 100 | 100 | 100 | 100 | 100 | 100 | 100 | 100 | 100 |
| | | NDCA | mol% | - | - | - | - | - | - | - | - | - | - |
| | | CHDA | mol% | - | - | - | - | - | - | - | - | - | - |
| | Physical properties | Inherent viscosity | dl/g | 1.17 | 1.16 | 1.18 | 1.21 | 1.25 | 1.25 | 1.25 | 1.25 | 1.25 | 1.26 |
| | | Melting point | °C | 282 | 283 | 262 | 258 | 288 | 288 | 288 | 288 | 288 | 307 |
| | | Crystallization temperature | °C | 259 | 258 | 242 | 235 | 266 | 266 | 266 | 266 | 266 | 280 |
| | | Glass transition temperature | °C | 124 | 123 | 116 | 112 | 120 | 120 | 120 | 120 | 120 | 123 |
| | | Crystallization rate | 1/°C | 0.044 | 0.040 | 0.050 | 0.043 | 0.046 | 0.046 | 0.046 | 0.046 | 0.046 | 0.037 |
| | | [NH$_2$] | $\mu$mol/g | 15 | 18 | 20 | 25 | 12 | 12 | 12 | 70 | 30 | 10 |
| | | [COOH] | $\mu$mol/g | 33 | 37 | 48 | 34 | 30 | 30 | 30 | 20 | 27 | 25 |
| | | [NH$_2$]/[COOH] | - | 0.5 | 0.5 | 0.4 | 0.7 | 0.4 | 0.4 | 0.4 | 3.5 | 1.1 | 0.4 |

(continued)

| Polyamide composition | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| | Polyamide | Parts by mass | 100 | 100 | 100 | 100 | 100 | 100 | 100 | 100 | 100 | 100 |
| | Glass fiber | Parts by mass | 43 | 43 | 43 | 43 | 43 | 100 | - | 43 | 46 | 43 |
| | Carbon fiber | Parts by mass | - | - | - | - | - | - | 43 | - | | - |
| | Antioxidant | Parts by mass | 0.8 | 0.8 | 0.8 | 0.8 | 0.8 | 0.8 | 0.8 | 0.8 | 0.8 | 0.8 |
| | Lubricantt | Parts by mass | 0.2 | 0.2 | 0.2 | 0.2 | 0.2 | 0.2 | 0.2 | 0.2 | 0.2 | 0.2 |
| | Nucleating agent | Parts by mass | 0.1 | 0.1 | 0.1 | 0.1 | 0.1 | 0.1 | 0.1 | 0.1 | 0.1 | 0.1 |
| | Colorant 1 | Parts by mass | 0.2 | 0.2 | 0.2 | 0.2 | 0.2 | 0.2 | 0.2 | 0.2 | 0.2 | 0.2 |
| | Colorant 2 | Parts by mass | - | - | - | - | - | 1 | - | - | 0.8 | - |
| | Impact modifier | Parts by mass | - | - | - | - | - | - | - | - | 8 | - |
| Physical properties of polyamide composition | Flexural strength | MPa | 272 | 272 | 274 | 275 | 265 | 370 | 390 | 272 | 250 | 272 |
| | Flexural modulus | GPa | 8.8 | 8.7 | 9.0 | 9.2 | 8.9 | 15.3 | 19.5 | 8.8 | 8.2 | 8.8 |
| | Color stability | - | A | A | A | A | A | A | A | B | A | A |
| | Heat aging resistance | - | A | A | A | A | A | A | A | B | A | A |
| | Hydrolysis resistance | - | A | A | A | A | B | B | B | A | A | C |
| | Moldability | - | A | A | A | A | A | A | A | A | A | B |

The "Ex." means "Example".

EP 4 455 219 A1

Table 2

| | | | | Co. Ex. 1 | Co. Ex. 2 | Co. Ex. 3 | Ex. 11 | Ex. 12 | Co. Ex. 4 | Ex. 13 | Co. Ex. 5 | Ex. 14 | Co. Ex. 6 |
|---|---|---|---|---|---|---|---|---|---|---|---|---|---|
| Polyamide | Diamine unit | EHDA | mol% | 4 | - | - | 4 | 4 | - | 4 | - | 4 | - |
| | | PHDA | mol% | 1 | - | - | 1 | 1 | - | 1 | - | 1 | - |
| | | MODA | mol% | 20 | 100 | 15 | 20 | 20 | 15 | 20 | 15 | 20 | 20 |
| | | NMDA | mol% | 75 | - | 85 | 75 | 75 | 85 | 75 | 85 | - | - |
| | | DMDA | mol% | - | - | - | - | - | - | - | - | 75 | 80 |
| | | EHDA+PHDA | mol% | 5 | 0 | 0 | 5 | 5 | 0 | 5 | 0 | 5 | 0 |
| | Dicarboxylic acid unit | TA | mol% | 100 | 100 | 100 | - | - | - | - | - | 100 | 100 |
| | | NDCA | mol% | - | - | - | 100 | 100 | 100 | - | - | - | - |
| | | CHDA | mol% | - | - | - | - | - | - | 100 | 100 | - | - |
| | Physical properties | Inherent viscosity | dl/g | 1.25 | 1.32 | 1.34 | 1.22 | 1.22 | 1.23 | 1.28 | 1.3 | 1.23 | 1.21 |
| | | Melting point | °C | 288 | 285 | 306 | 283 | 283 | 294 | 292 | 301 | 289 | 301 |
| | | Crystallization temperature | °C | 266 | 256 | 277 | 246 | 246 | 249 | 270 | 276 | 267 | 275 |
| | | Glass transition temperature | °C | 120 | 125 | 123 | 135 | 135 | 136 | 125 | 130 | 121 | 123 |
| | | Crystallization rate | 1/°C | 0.046 | 0.034 | 0.035 | 0.027 | 0.027 | 0.022 | 0.045 | 0.040 | 0.045 | 0.039 |
| | | $[NH_2]$ | µmol/g | 12 | 18 | 10 | 28 | 28 | 22 | 13 | 10 | 12 | 8 |
| | | $[COOH]$ | µmol/g | 30 | 38 | 24 | 40 | 40 | 35 | 38 | 35 | 38 | 30 |
| | | $[NH_2]/[COOH]$ | - | 0.4 | 0.5 | 0.4 | 0.7 | 0.7 | 0.6 | 0.3 | 0.3 | 0.3 | 0.3 |

(continued)

| | | Co. Ex. 1 | Co. Ex. 2 | Co. Ex. 3 | Ex. 11 | Ex. 12 | Co. Ex. 4 | Ex. 13 | Co. Ex. 5 | Ex. 14 | Co. Ex. 6 |
|---|---|---|---|---|---|---|---|---|---|---|---|
| Polyamide composition | Polyamide (Parts by mass) | 100 | 100 | 100 | 100 | 100 | 100 | 100 | 100 | 100 | 100 |
| | Glass fiber (Parts by mass) | - | 43 | 43 | 43 | - | 43 | 43 | 43 | 43 | 43 |
| | Carbon fiber (Parts by mass) | - | - | - | - | 43 | - | - | - | - | - |
| | Antioxidant (Parts by mass) | 0.8 | 0.8 | 0.8 | 0.8 | 0.8 | 0.8 | 0.8 | 0.8 | 0.8 | 0.8 |
| | Lubricant (Parts by mass) | 0.2 | 0.2 | 0.2 | 0.2 | 0.2 | 0.2 | 0.2 | 0.2 | 0.2 | 0.2 |
| | Nucleating agent (Parts by mass) | 0.1 | 0.1 | 0.1 | 0.1 | 0.1 | 0.1 | 0.1 | 0.1 | 0.1 | 0.1 |
| | Colorant 1 (Parts by mass) | 0.2 | 0.2 | 0.2 | 0.2 | 0.2 | 0.2 | 0.2 | 0.2 | 0.2 | 0.2 |
| | Colorant 2 (Parts by mass) | - | - | - | - | - | - | - | - | - | - |
| | Impact modifier (Parts by mass) | - | - | - | - | - | - | - | - | - | - |
| Physical properties of polyamide composition | Flexural strength (MPa) | 115 | 260 | 270 | 278 | 400 | 280 | 240 | 243 | 271 | 275 |
| | Flexural modulus (GPa) | 2.5 | 8.0 | 8.8 | 9.0 | 20.0 | 9.0 | 8.0 | 7.9 | 9.0 | 9.1 |
| | Color stability (-) | A | A | A | A | A | A | A | A | A | A |
| | Heat aging resistance (-) | A | A | A | A | A | A | A | A | A | A |
| | Hydrolysis resistance (-) | C | C | C | B | B | C | B | C | B | C |
| | Moldability (-) | B | C | C | B | B | C | A | A | A | B |

The "Ex." means "Example", and the "Co. Ex." means "Comparative Example".

The abbreviations relating to the compounds used in Table 1 and Table 2 above and compound contents thereof are shown in Table 3. In Table 1 and Table 2, "(EHDA+PHDA)" represents the total of blending amounts (mol%) of EHDA and PHDA in the diamine unit.

Table 3

| Abbreviations | Compounds |
|---|---|
| EHDA | 2-Ethyl-1,7-heptanediamine |
| PHDA | 2-Propyl-1,6-hexanediamine |
| MODA | 2-Methyl-1,8-octanediamine |
| NMDA | 1,9-Nonanediamine |
| DMDA | 1,10-Decanediamine |
| TA | Terephthalic acid |
| NDCA | 2,6-Naphthalenedicarboxylic acid |
| CHDA | 1,4-Cyclohexanedicarboxylic acid |

Comparisons between Examples 1 to 10 and Comparative Examples 1 to 3, between Examples 11 and 12 and Comparative Example 4, between Example 13 and Comparative Example 5, and between Example 14 and Comparative Example 6 reveal that the polyamides in Examples have high crystallization rates. That is, when polyamide compositions including the same dicarboxylic acid unit include, as the diamine unit thereof, a certain amount of a 2-ethyl-1,7-heptanediamine unit and/or a 2-propyl-1,6-hexanediamine unit, crystallization rates of polyamides are fastened. It can be understood that Examples including a polyamide with a high crystallization rate provide polyamide compositions with excellent moldability and excellent productivity as a result.

In addition, it is found that in comparison with Comparative Examples 2 to 6 including, as the branched aliphatic diamine unit, only the 2-methyl-1,8-octanediamine unit in which the branched structure thereof is a methyl group, decreases in melting point and glass transition temperature are small and heat resistance is excellent in Examples, because a 2-ethyl-1,7-heptanediamine unit and/or a 2-propyl-1,6-hexanediamine unit is included in a certain amount.

Accordingly, from Table 1 and Table 2, it is found that the polyamide compositions of Examples exhibit improved moldability while maintaining excellent heat resistance, are excellent in both moldability and heat resistance, further exhibit high flexural strength and flexural modulus by including a fibrous filler, and are also excellent in mechanical properties.

In addition, from Table 1 and Table 2, it is found that more excellent hydrolysis resistance can be exhibited by a polyamide composition in which the terminal amino group amount and the dicarboxylic acid unit of the polyamide are optimized.

Industrial Applicability

As described above, the polyamide composition of the present invention can simultaneously achieve heat resistance, mechanical properties, and moldability which have been heretofore difficult to achieve. Accordingly, the polyamide composition of the present invention can be used as various molded bodies required to have heat resistance and mechanical properties and can improve productivity when molded bodies are produced, and thus is remarkably useful.

Note that the present application is based on Japanese Patent Application (JP2021-206181) filed on December 20, 2021, which is incorporated by reference in its entirety.

**Claims**

1. A polyamide composition comprising a polyamide (A) and a fibrous filler (B), wherein

   the polyamide (A) comprises a diamine unit (X) and a dicarboxylic acid unit (Y),
   the diamine unit (X) comprises 0.1 mol% or more and less than 36 mol% of a diamine unit (X1),
   the diamine unit (X1) is a constituent unit derived from an aliphatic diamine, and the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

2. The polyamide composition according to claim 1, wherein the diamine unit (X1) comprises a constituent unit derived from an aliphatic diamine having 9 carbon atoms.

3. The polyamide composition according to claim 1 or 2, wherein the diamine unit (X1) comprises a constituent unit derived from at least one selected from the group consisting of 2-ethyl-1,7-heptanediamine and 2-propyl-1,6-hexanediamine.

4. The polyamide composition according to any one of claims 1 to 3, wherein the diamine unit (X) comprises 1 to 10 mol% of the diamine unit (X1).

5. The polyamide composition according to any one of claims 1 to 4, wherein the diamine unit (X) further comprises a diamine unit (X2), the diamine unit (X2) is a diamine unit other than the diamine unit (X1), and the diamine unit (X2) is a constituent unit derived from at least one selected from the group consisting of a linear aliphatic diamine, a branched aliphatic diamine other than the aliphatic diamine constituting the diamine unit (X1), an alicyclic diamine, and an aromatic diamine.

6. The polyamide composition according to any one of claims 1 to 5, wherein the diamine unit (X2) is a constituent unit derived from at least one selected from the group consisting of a linear aliphatic diamine and a branched aliphatic diamine having a methyl group as a branched chain.

7. The polyamide composition according to any one of claims 1 to 6, wherein the diamine unit (X2) is a constituent unit derived from a diamine having 6 to 10 carbon atoms.

8. The polyamide composition according to any one of claims 1 to 7, wherein the diamine unit (X2) is a constituent unit derived from at least one selected from the group consisting of 1,6-hexanediamine, 1,9-nonanediamine, 1,10-decanediamine, 2-methyl-1,5-pentanediamine, and 2-methyl-1,8-octanediamine.

9. The polyamide composition according to any one of claims 1 to 8, wherein [NH$_2$]/[COOH] indicative of a terminal amino group amount to a terminal carboxy group amount in the polyamide (A) is 0.1 to 30.

10. The polyamide composition according to any one of claims 1 to 9, wherein the dicarboxylic acid unit (Y) comprises a constituent unit derived from at least one selected from the group consisting of an aliphatic dicarboxylic acid, an aromatic dicarboxylic acid, and an alicyclic dicarboxylic acid.

11. The polyamide composition according to any one of claims 1 to 10, wherein the dicarboxylic acid unit (Y) comprises a constituent unit derived from at least one selected from the group consisting of terephthalic acid, cyclohexanedicarboxylic acid, and naphthalenedicarboxylic acid.

12. The polyamide composition according to any one of claims 1 to 11, comprising 1 part by mass or more and 200 pars by mass or less of the fibrous filler (B) based on 100 parts by mass of the polyamide (A).

13. The polyamide composition according to any one of claims 1 to 12, wherein the fibrous filler (B) is at least one selected from the group consisting of carbon fibers, glass fibers, and aramide fibers.

14. A molded body composed of the polyamide composition according to any one of claims 1 to 13.

## INTERNATIONAL SEARCH REPORT

| International application No. |
|---|
| **PCT/JP2022/046621** |

**A. CLASSIFICATION OF SUBJECT MATTER**

***C08L 77/06***(2006.01)i; ***C08G 69/02***(2006.01)i; ***C08K 7/02***(2006.01)i
FI:   C08L77/06; C08G69/02; C08K7/02

According to International Patent Classification (IPC) or to both national classification and IPC

**B. FIELDS SEARCHED**

Minimum documentation searched (classification system followed by classification symbols)

C08L77/06; C08G69/02; C08K7/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | US 5300557 A (HUELS AKTIENGESELLSCHAFT) 05 April 1994 (1994-04-05) claims, column 2, line 62 to column 3, line 4, example 1 | 1, 4-7, 9-14 |
| Y | | 1, 4-14 |
| A | | 2-3 |
| Y | WO 2020/040282 A1 (KURARAY CO., LTD.) 27 February 2020 (2020-02-27) paragraphs [0118]-[0119] | 1, 4-14 |
| A | | 2-3 |
| Y | JP 52-41692 A (DYNAMIT NOBEL AG) 31 March 1977 (1977-03-31) claims, p. 1, lower right column, line 19 to p. 2, upper left column, line 4, p. 3, upper right column, lines 1-10, p. 3, lower left column, line 10 to lower right column, line 10 | 1, 4-14 |
| A | | 2-3 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/046621**

| Patent document cited in search report | | | Publication date (day/month/year) | Patent family member(s) | | | Publication date (day/month/year) |
|---|---|---|---|---|---|---|---|
| US | 5300557 | A | 05 April 1994 | JP | 3-140327 | A | |
| | | | | claims, p. 3, lower left column, lines 13-17, p. 3, lower right column, line 13 to p. 4, upper left column, line 17 | | | |
| | | | | EP | 423472 | A2 | |
| WO | 2020/040282 | A1 | 27 February 2020 | US | 2021/0179778 | A1 | |
| | | | | paragraphs [0201]-[0202] | | | |
| | | | | EP | 3842471 | A1 | |
| | | | | CN | 112601776 | A | |
| | | | | KR | 10-2021-0048486 | A | |
| | | | | TW | 202017968 | A | |
| JP | 52-41692 | A | 31 March 1977 | US | 4111921 | A | |
| | | | | claims, column 1, lines 43-54, column 3, lines 58-68, example 1 | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011080055 A
- JP 2017517594 A
- WO 2020040282 A1
- JP H07228690 A
- JP 2021206181 A